# EUROPEAN PATENT SPECIFICATION

(11) **EP 3 109 444 B1**
(45) Date of publication and mention of the grant of the patent: **22.01.2025**
(21) Application number: 16172148.5
(22) Date of filing: 31.05.2016
(51) Int. Cl.: F02D 41/00, F02D 13/02, F02D 19/06, F02D 29/02, F02B 25/04, F02D 23/02

(54) **LOW-LOAD OPERATION METHOD FOR OPERATING A RECIPROCATING PISTON INTERNAL COMBUSTION ENGINE, AND CORRESPONDING ENGINE**
NIEDRIGLASTBETRIEBSVERFAHREN ZUM BETRIEB EINES HUBKOLBENVERBRENNUNGSMOTORS, UND ENTSPRECHENDER VERBRENNUNGSMOTOR
PROCÉDÉ DE FONCTIONNEMENT À FAIBLE CHARGE POUR FAIRE FONCTIONNER UN MOTEUR À COMBUSTION INTERNE À PISTON ALTERNATIF, AINSI QUE MOTEUR CORRESPONDANT

(30) Priority: 26.06.2015 EP 15173983
(43) Date of publication of application: 28.12.2016
(73) Proprietor: WinGD AG, 8400 Winterthur (CH)
(72) Inventor: Ioannou, Marios, 8472 Seuzach (CH); Hanz, Timo, 8280 Kreuzlingen (CH)
(74) Representative: IPS Irsch AG

(56) References cited:
- EP-A1- 0 397 521
- EP-A1- 1 380 738
- EP-A2- 1 291 507
- JP-A- 2003 138 943
- US-A- 5 035 206

## Description

The invention relates to a low-load operation method for operating a reciprocating piston internal combustion engine, computer program product for running an internal combustion engine, as well as a reciprocating piston internal combustion engine, in particular a uniflow-scavenged dual fuel large two-stroke diesel engine in accordance with the preamble of the independent claim of the respective category.

Large diesel engines are frequently used as drive units for ships or also in stationary operation, e.g. for the driving of large generators for the generation of electrical energy. In this respect, the engines as a rule run in permanent operation over considerable time periods making high demands on the operating security and on the availability. In particular long servicing intervals, low wear and an economic handling of fuels and operating materials are therefore central criteria for the operation of the machines for the operator. The piston running behavior of such large-bore slow running diesel engines is, among others, a determining factor for the length of the servicing intervals, the availability and, over the lubricant consumption, also directly for the operating costs and thus for the operating efficiency.

A further essential point having increasing importance for some years is the quality of the emissions, in particular the nitrogen oxide concentration in the emissions. The legal provisions and the limit values for the corresponding exhaust emission standards have been made increasingly stricter here and will also be made even stricter in the near future. This in particular has the consequence with large two-stroke diesel engines that the combustion of the classical heavy oil, which is heavily contaminated with pollutants, but also the combustion of diesel oil or other fuels will become increasingly more problematic because the observation of the exhaust emission standards will become more and more difficult, technically more complex and thus more expensive or because ultimately their observation is even no longer economically sensible so that the corresponding engines will have to be taken out of operation or at least converted in a complex and/or expensive manner.

In practice, there has therefore already long been a need for so-called "dual-fuel" engines, that is internal combustion engines, which can be operated using two different fuels. In this respect, on the one hand, gas, e.g. in the form of a natural gas, for example a so-called "liquefied natural gas" (LNG) or a gas in the form of a liquefied petroleum gas or another gas suitable for driving an internal combustion engine should frequently be combusted and, on the other hand, another fuel such as petrol, diesel, heavy fuel oil or another suitable liquid fuel can be combusted in one and the same engine. In this respect, the engines can be both two-stroke engines and four-stroke engines and they can, in this respect, be small engines, medium-sized engines or also large engines, in particular also large uniflow-scavenged two-stroke diesel engines, such as are used as drive units for ships, but are also frequently used for producing electrical energy in power stations.

Thus, a duel-fuel engine can be operated in two different modes. In a gas mode a gas, like LNG (liquefied natural gas) is used for the combustion in the cylinders. In a liquid mode a suited liquid fuel such as diesel or heavy oil is used for the combustion in the cylinders of the same engine. Within the scope of this application the term "large diesel engine" or the like encompasses also such large engines, which can be operated beside the diesel operation that is characterized by the self-ignition of the fuel, also in an Otto operation that is characterized by an external ignition, or in a mixed form of these two operations. A dual fuel engine can be switched during the operation from the gas mode into the liquid mode and vice versa.

In the liquid mode, the fuel is typically introduced directly into the combustion space of the cylinder and is combusted there in accordance with the principle of self-ignition. In the gas mode it is known to mix the gas in the gaseous state with the scavenging air in accordance with the Otto principle mode of operation in order to thus generate an ignitable mixture in the combustion chamber of the cylinder. In the gas mode it is possible to use the self-ignition of a small amount of injected liquid fuel for the external ignition of the gaseous mixture in the combustion chamber.

However, purely gas engines, that is engines which can only be operated with gas and not alternatively with diesel, heavy oil or another fuel, are also in increasing demand, in particular when high exhaust emission standards are required which can only be economically sensibly observed with a justifiable technical effort by the combustion of gas. Such a purely gas engine is set forth, for example, in WO 2010 147071 A1. Further prior art can e.g. be found in DE 10 2010 005814 A1. Also in purely gas engines it is known to use the self-ignition of a small amount of injected liquid fuel such as diesel for the external ignition of the gaseous mixture in the combustion chamber.

As already mentioned, Dual-Fuel (DF) engines are designed to operate with Gas and/or Diesel fuels, depending on the requirement. In both fuel operating modes, the Gas combustion and Diesel combustion processes are influenced by the engine design geometrical features (such as the geometric compression ratio), and by operating features, for example the exhaust valve timing (which affects the effective compression ratio, etc). Due to such factors/parameters the operation of an engine in some areas (eg load ranges) is feasible and efficient, whereas in some other areas (load ranges) is inefficient, and sometimes impossible to run.

The operation of the DF engine in Gas mode at very low loads (specifically, at loads below 10% load) is extremely unstable and therefore impossible to run with the current engine configuration and settings. The reason for this engine behaviour is the fact that at these low loads the air-fuel ratio (i.e. lambda=air/fuel) inside the cylinder is extremely lean and it therefore prevents proper combustion of the mixture from taking place. As a result the very lean mixtures lead to misfiring cycles and extremely unstable operation because there is too much air present compared to the amount of fuel being present in the combustion chamber. In other words, the air-fuel mixture in the combustion chamber has a high value of lambda.

Low load operation for example below 25% load is not only useful but very often absolutely necessary in practice. It is necessary when a ship is approaching the harbor or it is sailing in big rivers or for example, in a lot of different Manoeuvring operation modes (load typically between 5% to 25% load). Manoeuvring operation of a ship means that, the lever of the telegraph is shifted from one defined speed/load position to another (e.g. from "dead slow" to "slow", and vice-versa). This instantaneous shift of the operating point of the engine is translated into a speed/load ramp within the propulsion control system. The gradient of the ramp is defined by the time required for the engine to reach the new set point. During this transient engine operation the air-fuel ratio must be kept within an acceptable "operating window" for the gas combustion, in order to avoid abnormal combustion.

During ramp-up, (i.e. when requesting an increase in engine load) the amount of fuel injected starts to increase instantaneously while the provided boost pressure from the Turbocharger starts to build-up slowly. The combined result from these two actions can cause a rich mixture (i.e. low lambda) which could lead to continuous pre-ignition of the charge during the load-up. On the other hand, during ramp-down (i.e. when requesting a decrease in engine load during manoeuvring) the amount of fuel injected is significantly reduced and as a result the charge becomes very lean (i.e. high lambda). If the air-fuel ratio in the cylinder is outside the flammability (ignitability) limits then combustion becomes very unstable and numerous misfiring cycles take place.

Some attempts have been done to adjust lambda by some means or techniques, for example by: (a) the reduction of air amount through variable-speed Auxiliary blowers, or (b) the extreme advancement of Exhaust Valve Closure (EVC) to trap combustion gases inside the cylinder, which could reduce lambda and increase charge temperatures. However, none of these or other techniques could offer a properly adjusted lambda, in particular a sufficiently low adjusted lambda that would provide stable combustion for the very low load operation. Up until today it was not possible to operate the engines, in particular large Diesel Engines especially in the gas operation mode at low loads, for example below 20%, 15%, 10% or at even lower loads.

In EP 1 380 738 it is proposed to control the amount of scavenging air being available for the next combustion process by an appropriate actuation of the exhaust valve. To this end at least one cylinder of the engine is operated in a four-stroke mode comprising a so-called pre-scavenging phase that starts with a quite early opening of the exhaust valve. By this, a part of the thermal energy is used to enhance the power of the turbocharger.

In US 5,035 5206A a dual fuel, natural gas/diesel two-stroke engine is disclosed comprising a cylinder and a piston in the cylinder, wherein inlet ports arranged around the cylinder are uncovered by the downward movement of the piston. A blower forces air through the inlet ports when they are uncovered. The engine includes an exhaust port and ab exhaust valve for exhausting combustion gases once each cycle.

It is thus the object of the invention to provide a low-load operation method for operating a reciprocating piston internal combustion engine, a computer program product for running an internal combustion engine, as well as reciprocating piston internal combustion engine, in particular a uniflow-scavenged dual fuel large two-stroke diesel engine, the low-load operation method offering a properly adjusted lambda, in particular a sufficiently low adjusted lambda that would provide stable combustion for the very low load operation. In particular to operate an internal combustion engine as for example a dual-fuel large Diesel Engines in the gas operation mode at low loads, for example below 20%, 15%, 10% or even at lower loads below 5% down to nearly 0% around 0.5% load.

The subject matters of the invention satisfying these objects are characterized by the features of independent claims 1, 13 and 14.

The respective dependent claims relate to particularly advantageous embodiments of the invention.

The invention thus relates to a low-load operation method for operating a reciprocating piston internal combustion engine, in particular a uniflow-scavenged dual-fuel two-stroke large diesel engine comprising a cylinder in which a piston is arranged movable to and fro between a top dead center corresponding to a crank angle of 0° or 360°, respectively, and a bottom dead center corresponding to a crank angle of 180° and having an outlet valve which is hydraulically actuable via a valve hydraulic system at a predefined opening pressure by means of a hydraulic medium. According to the present invention, in a low-load range between 0% and 25% of a maximum engine load, the internal combustion engine is operated in a gas mode wherein the crank angle for opening the exhaust valve of the internal combustion engine is reduced from a normal crank angle for opening the exhaust valve in a load range above 25% of the maximum engine load, to a value between 15° and 90°, and wherein in the low-load range the crank angle for opening the exhaust valve is reduced with decreasing load.

Accordingly, in the low load range the crank angle at which the exhaust valve is opened is changed to a considerably smaller value. The normal crank angle at which the exhaust valve is opened in the load range above 25% of the maximum engine load is for example about 120°.

In the low load range between 0% and 25% of the maximum engine load the exhaust valve of the internal combustion engine is opened at a crank angle between 15° and 80°.

Reliably and economically running an internal combustion engine, in particular a uniflow-scavenged dual fuel large two-stroke diesel engine, in a very low load range below 25% low and down to nearly 0% load of a maximum load of the combustion engine is currently only possible with the application of the low-load operation method in accordance with the present invention which is named the eEVO (early Exhaust Valve Opening) technique. The eEVO technique that is the method in accordance with the present invention, offers for the first time a properly adjusted lambda, in particular a sufficiently low adjusted lambda providing a stable combustion even in the very low load operation mode. The eEVO technique according to the present invention is particularly useful to operate an internal combustion engine as for example a dual-fuel large diesel engines in the gas operation mode at very low loads, for example below 20%, 15%, 10% or even at lower loads below 5% down to nearly 0% around 0.5% load which was not possible up to now before the availability of the eEVO technique in accordance with the present invention.

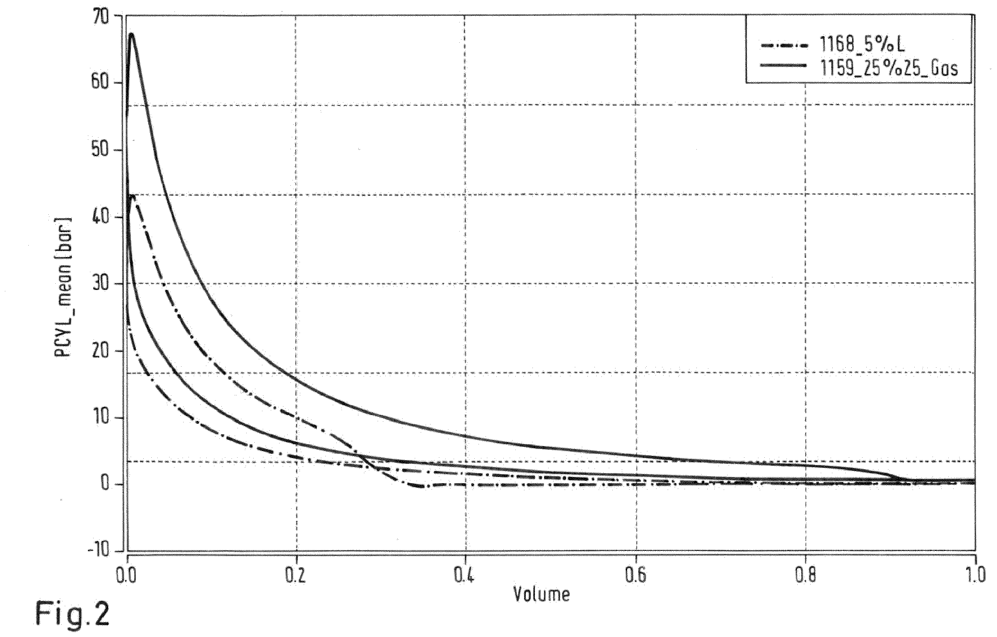

In other words, eEVO is a technique that can be used to instantaneously (when required) reduce the lambda inside the combustion chamber of the cylinder down to a level providing stable and continuous combustion at very low loads. The technique relies on making the engine control system to intentionally introduce more fuel in the cylinder (compared to the fuel required under "normal" conditions), without affecting/disrupting engine operation and without the need of extra hardware. The eEVO technique in accordance with the present invention involves opening the exhaust valve extremely early (even earlier than 50°CA aTDC) as opposed to the normal opening timing of about 120°CA aTDC. By doing so the expansion process of the hot products of combustion is abruptly interrupted by the early opening of the exhaust valve and therefore a considerable portion of the useful energy from these hot gases is lost into the exhaust system rather than being utilized in producing work on the piston. As a result, the efficiency of the cycle is sharply deteriorated as for example shown by Fig. 2. Consequently, the engine control system supplies the cylinder with more fuel in an attempt to overcome this loss in efficiency and maintain operation at that engine load. The resulting increase in the injected fuel from this method causes a sufficient reduction in lambda so that a stable combustion and therefore steady engine operation can be sustained at the very low loads. The eEVO technique can be applied to all engine loads below 25% providing stable operation in particular in gas mode operation.

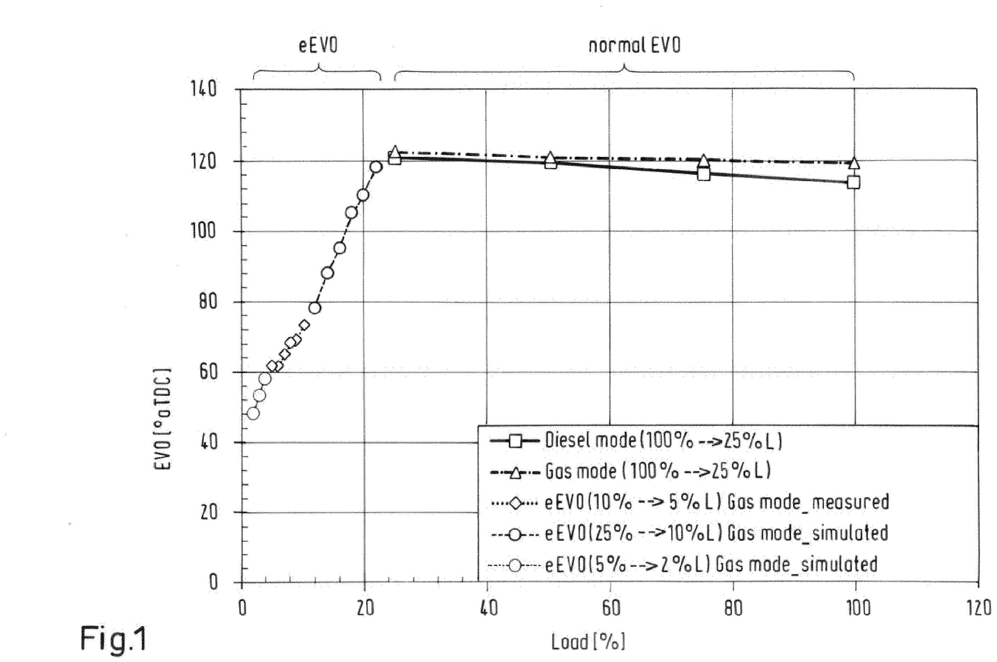

According to the invention, in the low-load range the crank angle for opening the exhaust valve is reduced with decreasing load. This is shown in Fig. 1. With decreasing load the crank angle for opening the exhaust valve is continuously reduced.

Regarding an embodiment of the present invention which is very important in practice, the exhaust valve of the internal combustion engine is opened at an crank angle between 15° and 90°, preferably between 30° and 70°, most preferably at an crank angle of about 40°, wherein the internal combustion engine is operated in the low-load range between 0.5% and 20%, preferably between 5% and 15%, in particular at about 10% of the maximum engine load.

In order to reduce lambda that is to increase the relative amount of fuel compared to air in the combustion chamber of the cylinder, most particularly a certain amount of fuel, in particular gas is supplied into the combustion chamber of the cylinder so that the break specific fuel consumption at 42.7 MJ/Kg is advantageously between 450 g/kWh at about 0.5% of the maximum engine load and 150 g/kWh, in particular 180 g/kWh, at about 20% of the maximum engine load and.

Regarding a further important embodiment of the present invention, in a gas operation mode a nitrogen oxide emission is between about 1 g/kWh and about 4 g/kWh in a load range between about 0.5% of the maximum engine load about 25% of the maximum engine load and / or in the gas operation mode a hydrocarbon emission is between about 20 g/kWh and about 3 g/kWh in a load range between about 0.5% of the maximum engine load about 25% of the maximum engine load and / or in the gas operation mode a carbon oxide emission is between about 350 vol. ppm dry and about 150 vol. ppm dry in a load range between about 0.5% of the maximum engine load about 25% of the maximum engine load.

Most preferably, in the gas operation mode an average exhaust gas temperature in an exhaust port of the combustion engine is between about 280°C and about 220°C in a load range between about 0.5% of the maximum engine load about 25% of the maximum engine load and/or in the gas operation mode an average exhaust gas temperature before entering into a turbo charger turbine of the combustion engine is between about 330°C and about 300°C in a load range between about 0.5% of the maximum engine load about 25% of the maximum engine load.

Preferably, a gas pressure in the combustion chamber of the cylinder varies between about 6 bar and about 60 bar in a crank angle range between about -30° and about 30° in respect of the top dead center corresponding to 0°.

In order to open the exhaust valve very early at a small crank angle in the low operation mode below 25% of the maximum engine load a servo-oil pressure for actuating the exhaust valve is increased to a level similar to that required at about the maximum engine load equal to about 100% engine load, wherein the servo oil-pressure is preferably at about 280 bar.

In practice, the low-load operation mode in accordance with the present invention is particularly used in a steady low-load operation gas mode, preferably below about 10% of the maximum engine load and /or the eEVO technique in accordance with the method of the present invention is used in a maneuvering operation mode, preferably between about 5% and 25% of the maximum engine load.

Furthermore, the invention relates to a computer program product to be implemented in an engine control system of a reciprocating piston internal combustion engine, in particular a uniflow-scavenged dual-fuel two-stroke large diesel engine and for operating the combustion engine in a low-load operation mode as described in the claims, the description and the drawings of the present patent application as well as to a reciprocating piston internal combustion engine, in particular a uniflow-scavenged dual-fuel two-stroke large diesel engine comprising an engine control system including a computer program product as mentioned before for operating the combustion engine in a low-load operation mode according to the eEVO method of the invention.

The invention will be explained in more detail in the following with reference to the schematic drawing. There are shown:
- Fig. 1:: eEVO (at loads < 25%) and normal EVO (at loads 25% to 100%) for stable Gas mode operation across the full load range (eg X72DF engine);
- Fig. 2:: PV diagram depicting eEVO at 5% load and EVO at 25% load;
- Fig. 3:: Specific BSFC values for eEVO (loads < 25%) and normal EVO (25% - 100%) for Gas mode;
- Fig. 4:: Specific NOx for eEVO (loads < 25%) and normal EVO (25% -100%) for Gas mode;
- Fig. 5:: Specific THC for eEVO (loads < 25%) and normal EVO (25% -100%) for Gas mode;
- Fig. 6:: CO emissions for eEVO (loads < 25%) and normal EVO (25% -100%) for Gas mode;
- Fig. 7:: Gas temperature in exhaust port for eEVO (loads < 25%) and normal EVO (25% -100%) for Gas mode;
- Fig. 8:: Gas temperature before turbine for eEVO (loads < 25%) and normal EVO (25% -100%) for Gas mode;
- Fig. 9:: In-cylinder pressure at very low loads, indicating stable combustion at 5% Load;
- Fig. 10a:: In-cylinder pressure at loads from 10% down to 5%, at the corresponding eEVO timings for Gas mode operation;
- Fig. 10b:: In-cylinder pressure and PV-diagram at loads from 10% down to 5%, at the corresponding eEVO timings, for Gas mode operation

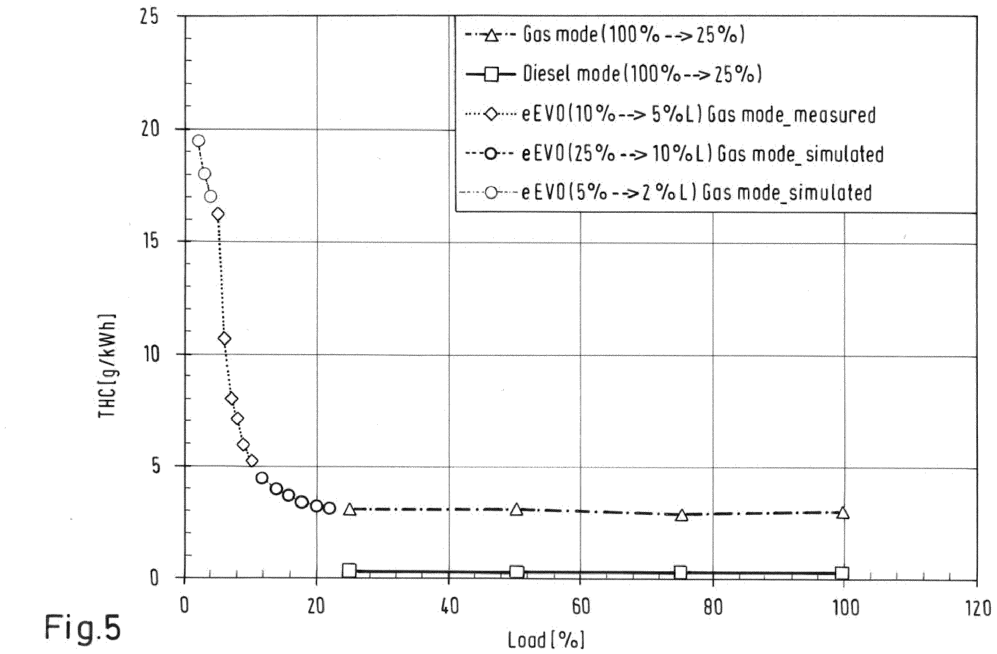

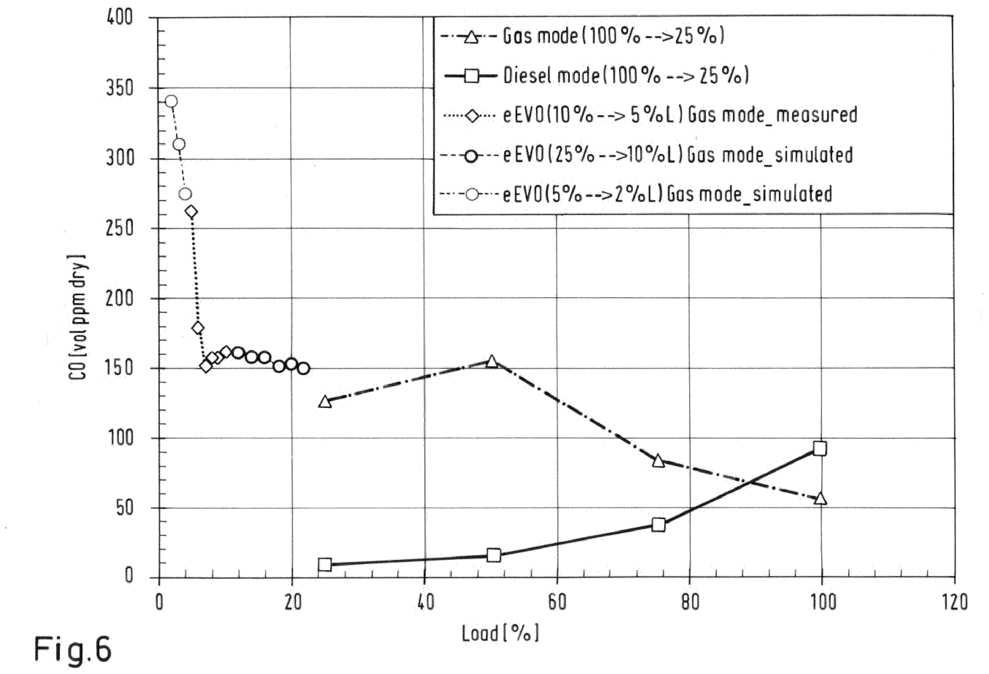

In the following, the "early Exhaust Valve Open (eEVO) technique that is the low-load operation in accordance with the present invention will be explained in greater detail providing measured or simulated data, respectively, according to Fig. 1 to Fig. 10b

The eEVO technique in accordance with the present invention is a low-load operation method for operating a reciprocating piston internal combustion engine, in particular a uniflow-scavenged dual-fuel two-stroke large diesel engine, which technique can be used to instantaneously (when required) reduce the lambda inside the cylinder, down to a level providing stable and continuous combustion at very low loads. As already mentioned, this technique relies on making the engine to intentionally introduce more fuel in the cylinder (compared to the fuel required under "normal" conditions), without affecting/disrupting engine operation, and without the need of extra hardware.

Fig. 1 exemplarily provides some data regarding a special embodiment of an eEVO technique at loads < 25% and for a well known "normal" Exhaust Valve Opening (EVO) operational method at loads from 25% to 100% for stable Gas mode operation across the full load range (eg for a X72DF engine) describing in a general manner how the eEVO technique works. eEVO involves opening the Exhaust Valve extremely early (even earlier than 50°CA aTDC), as opposed to the normal opening timing of about 120°CA aTDC. Please note that X°CA aTDC means "X degree Crank Angle after Top Dead Center" corresponding to the simpler notation "a crank angle of X°" as for example used in the claims.

By doing so the expansion process, that by opening the exhaust valve very early, the hot products of combustion or the combustion as such, respectively, is abruptly interrupted by the early opening of the exhaust valve and therefore a considerable portion of the useful energy from these hot gases is lost into the exhaust system rather than being utilized in producing work on the piston.

As can be clearly seen by the PV diagram according to Fig. 2, as a result the efficiency of the cycle is sharply deteriorated. Consequently, the engine control system supplies the cylinder with more fuel in an attempt to overcome this loss in efficiency and maintain operation at that engine load. The resulting increase in the injected fuel from this method causes a sufficient reduction in lambda so that stable combustion, and therefore steady engine operation can be sustained at very low loads. The eEVO technique can be applied to all engine loads below 25% and provide stable operation in Gas mode.

In order to better understand the present invention and to better distinguish it from the known normal EVO technique, the normal EVO method used for normal engine operation that is in load ranges from 25% to 100% load will be briefly explained again in the following.

For clarification and comparison purposes, the section below provides a short description of the normal EVO timing used on 2-stroke engines for both, Gas and Diesel modes. Under normal conditions during typical engine operation, the timing of the exhaust valve opens under EVO conditions is defined by the performance of the engine. When the exhaust valve opens, the high pressure hot exhaust gases exit the cylinder and cause the in-cylinder pressure to drop. This drop continues to reduce as long as the valve remains open. Depending on the opening timing the pressure inside the cylinder is intentionally timed to reach a value close to the pressure of the fresh scavenge air entering the cylinder as soon as the intake ports are uncovered by the descending piston. More specifically, the EVO timing is specified to be such so that at 1° to 1 .5°CA before the intake ports open, the pressure inside the cylinder is the same as the scavenge air pressure. This ensures that when the ports open (in the next crank angles) the pressure in the cylinder is just below (at about 0.2 bar) the scavenge air pressure ensuring the forward flow of the fresh air into the cylinder. This approach prevents the hot corrosive exhaust gases that are inside the cylinder from briefly entering the intake air receiver, a process also known as "blowback".

On the other hand, opening the exhaust valve earlier than this timing penalizes the thermodynamic efficiency of the cycle because the useful energy of the hot combustion gases is lost into the exhaust system and the fuel consumption of the engine is increased significantly. A two-stroke dual fuel engine in accordance with the present invention is tuned for both operational modes, that for the combustion of Diesel and Gas. Fig. 1 shows the typical Exhaust Valve Opening timing that is used at all the IMO load points (25, 50, 75 and 100%), which is about 120°CA after TDC. For comparison purposes Fig. 1 also shows the timing for the new eEVO technique according to the invention.

In the following some embodiments for the application of eEVO technique as well as measured or simulated performance data are discussed and presented in the drawings. The eEVO technique has been applied on dual fuel (DF) test engines. Absolutely stable low load operation of the engine in Gas mode was successfully achieved at loads even below 3%, even down to 0.5%. Before eEVO it was not possible to run the engine in gas mode at such low loads. The effects of eEVO technique on engine performance depicted on the attached figures show that the technique is robust, does not increase fuel consumption significantly, and keeping emissions relatively low at the same time. The load range in which the eEVO technique can be successfully applied is for all loads below about 25%. Measured data from the eEVO tests on the engine are available for operation between 10% down to 5% load. However, as already mentioned, eEVO is also applicable for all loads between 25% down to 10%, and for all loads below 5% least down to 0.5% load. For some load ranges the results depicted on the figures are extrapolated (projected) as indicated. For comparison purposes the figures show also the performance of the engine during normal operation at the IMO load points 25, 50, 75 and 100%.

| ENGINE LOAD (%) | | 10% | 9% | 8% | 7% | 6% | | 5% |
|---|---|---|---|---|---|---|---|---|
| Gas flow measured | kq/h | 447.6 | 414.4 | 385.9 | 376.4 | 347.7 | | 315.0 |
| | | | | | | | | |

| ENGINE LOAD (%) | | 100% | 75% | 50% | 25% | | | |
|---|---|---|---|---|---|---|---|---|
| Gas flow measured | kq/h | 2909.0 | 2180.0 | 1477.0 | 765.0 | | | |

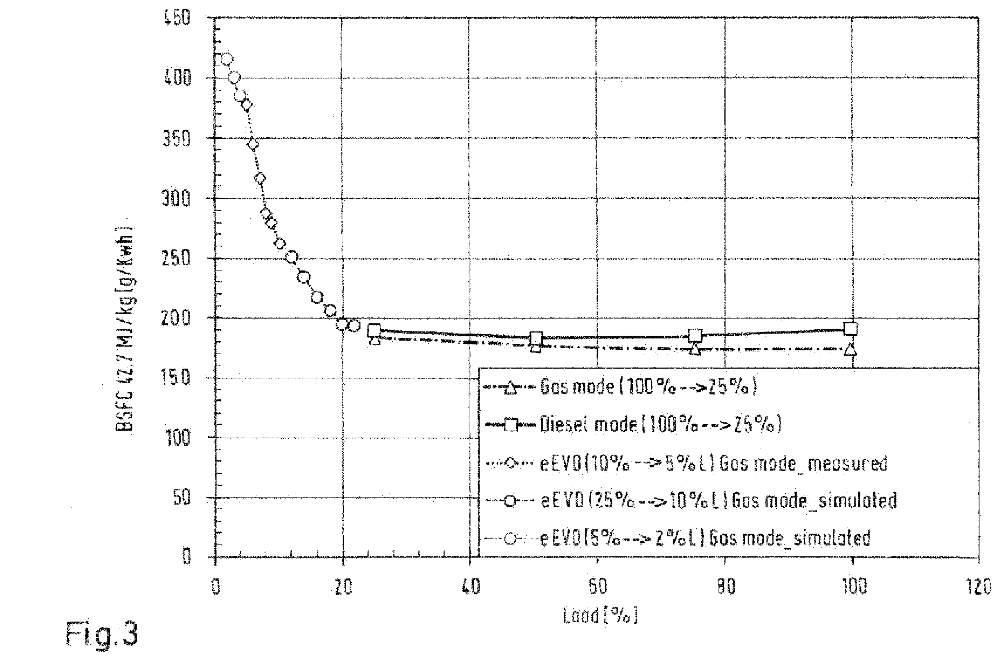

The so called Break Specific Fuel Consumption (BSFC) values are depicted in Fig. 3. Due to the fact that the eEVO technique relies on penalizing intentionally the cycle's efficiency so that more fuel is provided into the combustion chamber of the cylinder in order to reduce lambda, the specific BSFC values (g/kWh) are relatively high. However, the absolute values (kg/h) are more than acceptable as shown in Table 1 below, because the fuel flow rate at such low loads is by default fairly low.

### Table 1: Absolute BSFC values for eEVO (loads 10% - 5%) and normal EVO (25% -100%) for Gas mode

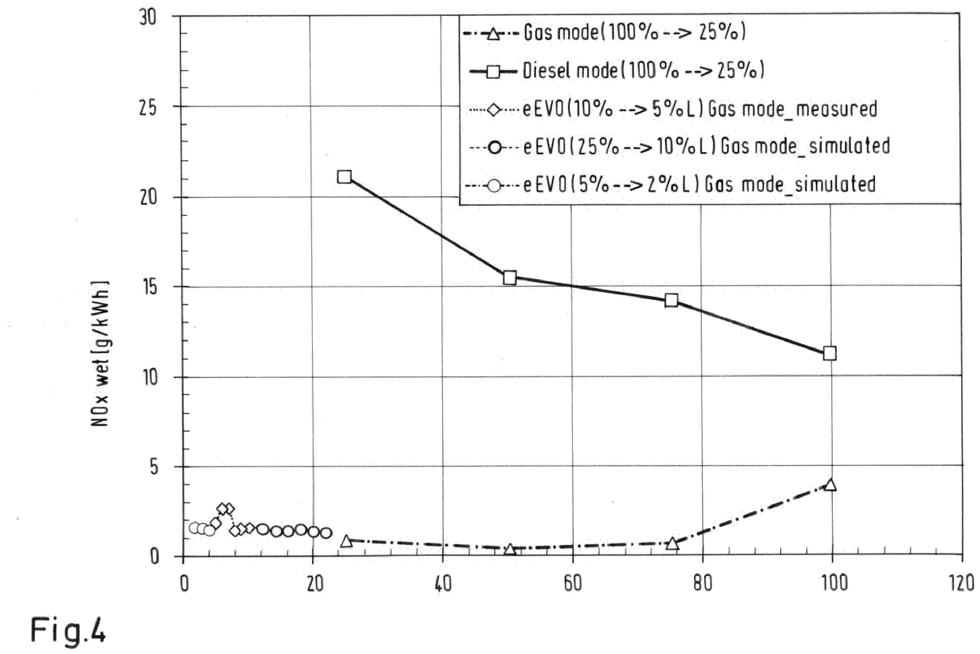

Figure 4. specific NOx for eEVO (loads < 25%) and normal EVO (25% -100%) for gas operation mode. The NOx, THC and CO emissions measured during the application of eEVO are depicted in Fig. 4 to Fig. 6. It can be clearly seen that the NOx emissions are not significantly affected by the eEVO technique since the temperatures of combustion at these low loads are not high. In addition, the THC and CO are higher in specific values (g/kWh) but not significantly high in absolute terms as can be seen from Table 2 below. The small insignificant increase of THC in absolute terms is attributed to the "excess" fuel inside the cylinder which amplifies crevice volumes as a source of unburnt hydrocarbons. Furthermore, the relatively richer combustion gives a small but insignificant rise to the CO emissions. In addition, the eEVO method has a positive effect on the THC emissions since the charge is richer and a much more complete combustion takes place. Without applying the eEVO method the THC rises up to 5000 ppm due to unstable operation while when using it the THC remains at roughly 1000ppm at very low loads.

**Table 2: Absolute NOx, THC and CO emissions for eEVO (loads 10% - 5%) and normal EVO (25% -100%), for Gas mode**

| ENGINE LOAD (%) | | 10% | 9% | 8% | 7% | 6% | 5% |
|---|---|---|---|---|---|---|---|
| NOx | vol-ppm, wet | 81 | 77 | 62 | 105 | 84 | 49 |
| CO | vol-ppm, dry | 161 | 157 | 157 | 151 | 179 | 262 |
| THC as C1 | vol-ppm, wet | 693 | 766 | 804 | 795 | 859 | 1093 |
| CO2 | vol-%, dry | 2.72 | 2.60 | 2.53 | 2.46 | 2.33 | 2.16 |
| O2 | vol-%, dry | 16.20 | 16.37 | 16.48 | 16.57 | 16.75 | 17.01 |

Regarding the exhaust gas temperatures, using the eEVO technique the hot high pressure gases from combustion are released from the combustion chamber into the exhaust system at a much earlier time than at normal conditions for example under EVO. This seems to have an effect on the exhaust gas temperature and the components of the exhaust system. The measurements executed on the engine showed that the exhaust valve temperature, at 5% load, was in the region of 450°C to 500°C, which is significantly well below the temperature limit.

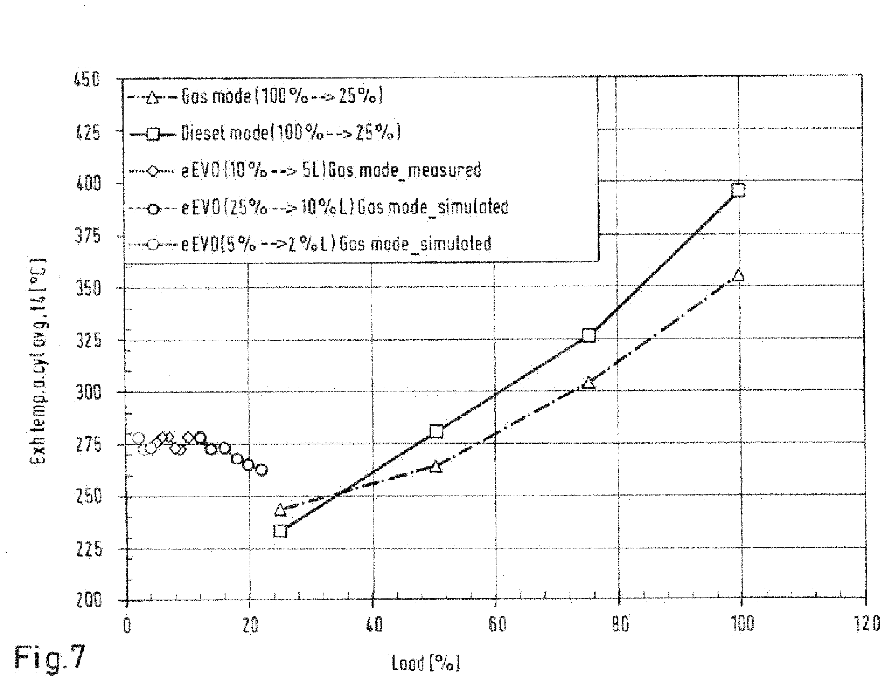

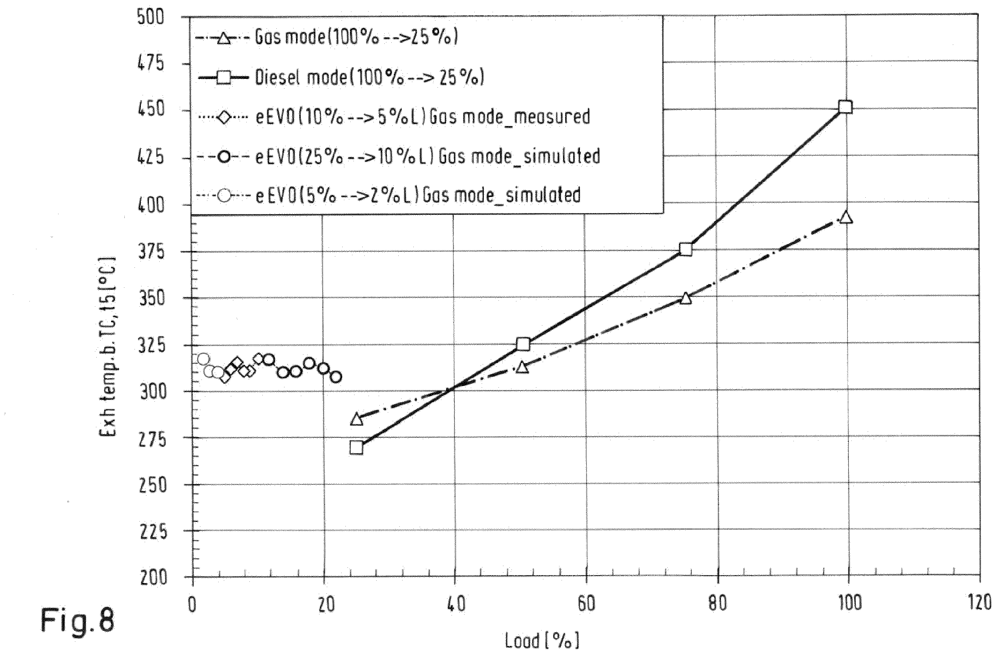

In addition, the relevant exhaust gas temperatures are depicted in Fig. 7 and Fig. 8. It can be seen that the eEVO technique caused an increase, of about 30 - 40°C in the temperature of the gases leaving the cylinder. This increase is not significant because the temperatures at these low loads are in general not high. It can be seen from Fig. 7 and 8 that the absolute temperatures measured in the exhaust system are well below the limiting temperatures of the components of the exhaust system.

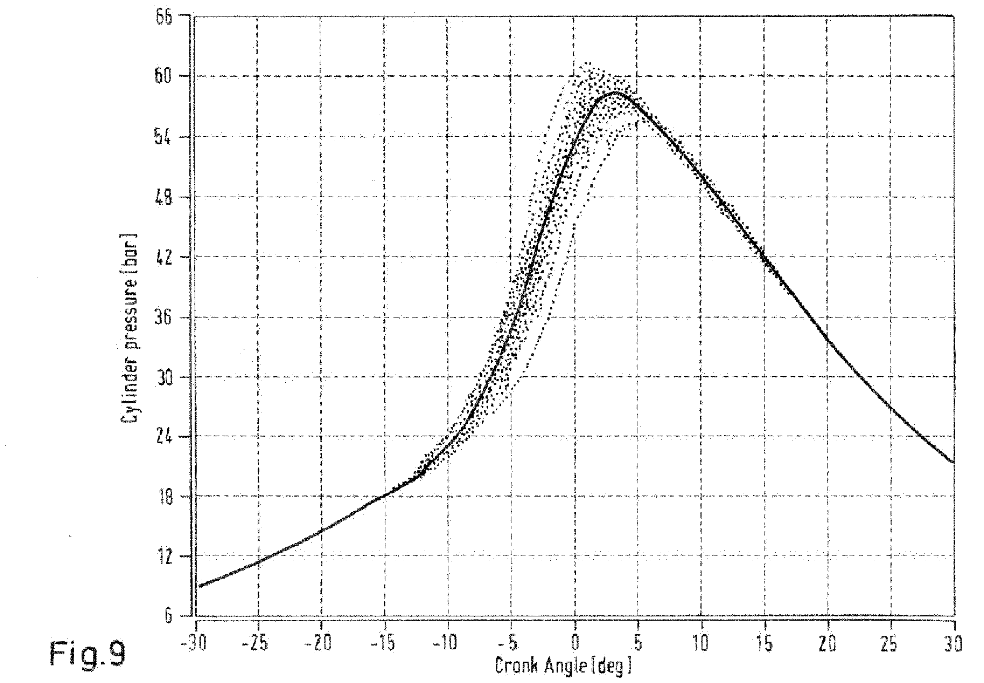

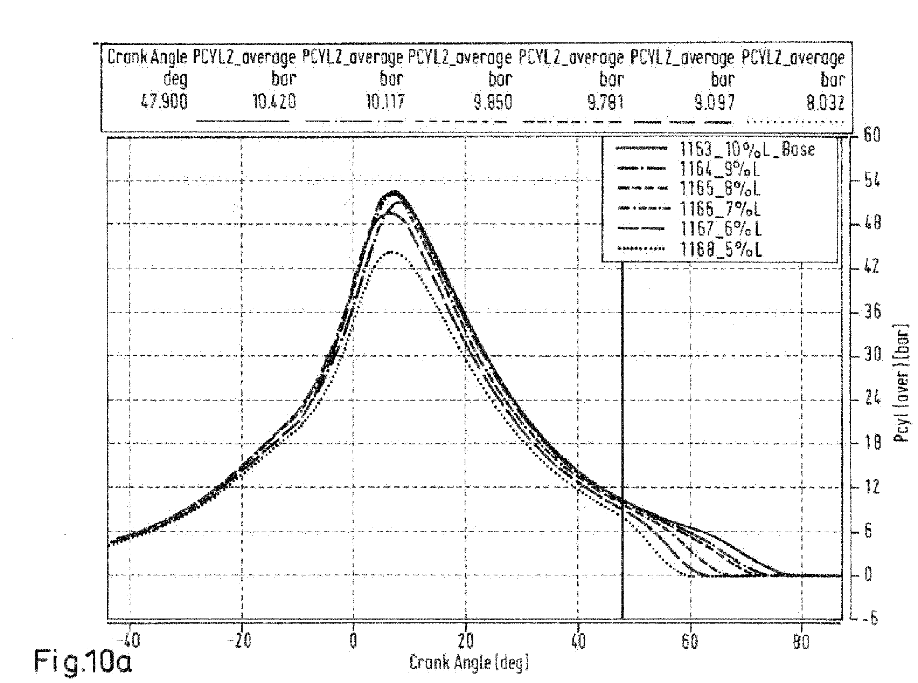

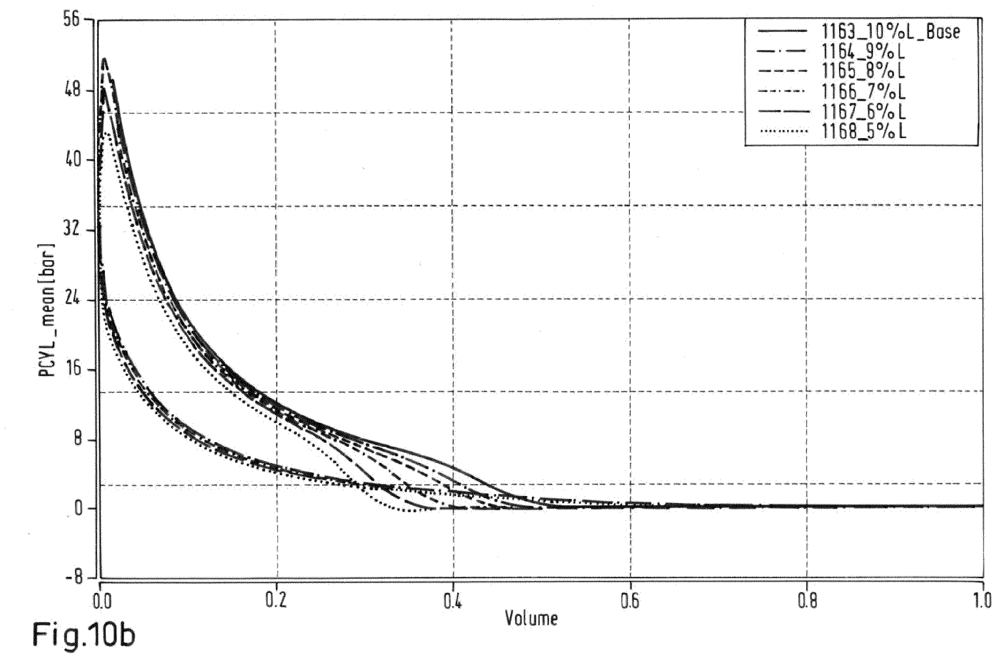

Regarding the In-Cylinder pressure, Fig. 9, Fig. 10a, and Fig. 10b show the in-cylinder pressures at the low load operation that was achieved with eEVO. It can be seen from figure 9 that combustion stability was successfully achieved for all the cycles that were recorded during the test. This is evident from the shape of the pressure trace and the very small cycle-by-cycle variation. Figure 10a shows the eEVO timings that were used to progressively reduce the load from 10% down to 5%, and the corresponding pV-diagrams according to Fig. 10b show the relevant penalty involved in the efficiency from the use of eEVO at each load.

The servo-oil pressure, as the name implies, is the oil pressure in the servo-oil system which is responsible for opening the exhaust valve. This pressure needs to be sufficient enough to open the exhaust valve against the pressure that exists inside the cylinder at the time that the valve is required to open. Under normal EVO conditions the maximum servo-oil pressure is required at 100% load where the pressures inside the cylinder are the highest, compared to the other loads. Under this condition a typical servo-oil pressure is about 280bar (eg X72DF engine).

Regarding the eEVO technique the exhaust valve is requested by the engine control system to open very early compared to the normal opening time. As shown in Fig. 10a or Fig. 10b, respectively, the exhaust valve is required to open while the pressure inside the cylinder is higher than that at normal EVO timing and more specifically when the pressures are at about 8 - 10 bar. In order to achieve eEVO the servo-oil pressure needs to be increased to levels similar to those required at 100% engine load (ie 280 bar).

Summarizing the discussion, the benefits from the application of eEVO technique in accordance with the present invention are obvious:
a) Without eEVO the gas engine cannot operate at low loads, especially below 15%. Only if eEVO is applied the gas engine can run even below 10% load and even below 5%..
b) The application of eEVO will enable ships to manoeuvre within harbours, not only in ECAs (Emission Control Areas) but also outside ECAs because it reduces the emissions during such an operation. Emissions of NOx and Soot are lower than those emitted during manoeuvring in Diesel mode.
c) The application of eEVO will enable ships to have a smoother and therefore safer operation in heavy sea (waves), due to the faster and better response of the engine to wave loading.

What is more, the operation of the DF engine in gas mode from 25% down to 15% load can also be achieved by combining eEVO with other engine performance tunings such as an early Exhaust Valve Closure and/or a variable speed Auxiliary Blower. The combination of eEVO with such parameters can improve further the engine performance during this load range. In general, eEVO technique can very advatageously be applied to three different fields of engine operation as described below in detail (Low-load operation, Manoeuvring and Wave loading).

The eEVO method can particularly advantageously be applied to three main fields that are important for the stable operation of the DF engine and its flexible operation.

### (I) Steady Low-Load operation (< 10% load) in Gas mode

This field is already described in great detail above in this descrption. The eEVO technique is currently the only method that can enable stable operation of the DF in Gas mode at all loads below 10%.

### (II) Manoeuvring operation (between 5% to 25% loads)

Manoeuvring operation of a ship means that, the lever of the telegraph is shifted from one defined speed/load position to another (e.g. from "dead slow" to "slow", and vice-versa). This instantaneous shift of the operating point of the engine is translated into a speed/load ramp within the propulsion control system. The gradient of the ramp is defined by the time required for the engine to reach the new set point. During this transient engine operation the air-fuel ratio must be kept within an acceptable "operating window" for the gas combustion in order to avoid abnormal combustion.

During ramp-up, (i.e. when requesting an increase in engine load) the amount of fuel injected starts to increase instantaneously while the provided boost pressure from the Turbocharger starts to build-up slowly. The combined result from these two actions can cause a rich mixture (ie low lambda) which could lead to continuous pre-ignition of the charge during the load-up. On the other hand, during ramp-down (i.e. when requesting a decrease in engine load during manoeuvring) the amount of fuel injected is significantly reduced and as a result the charge becomes very lean (ie high lambda). If the air-fuel ratio in the cylinder is outside the flammability (ignitability) limits then combustion becomes very unstable and numerous misfiring cycles take place.

With eEVO technique the load can be adjusted instantly through the control of exhaust valve opening which strongly affects, and can therefore control the fuel amount injected. With this approach the air/fuel ratio can be set to sufficient values adequate enough to secure stable combustion during load ramp-up or down, while manoeuvring. Subject to the capabilities and flexibility of the engine control system, different optimized settings can be used for the ramp-up and ramp-down cases. During ramp-down more aggressive settings are required, i.e. the eEVO timing can be set earlier (ie advanced), in relation to the setting for steady state operation in order to prevent the formation of a very lean charge. During ramp-up the eEVO timing can be set later (ie retarded), in relation to the setting for steady state engine operation in order to prevent the formation of a very rich charge. This approach can provide a good load response capability since it is significantly fast compared to the slower response of a Turbocharger (T/C) to build-up boost pressure during manoeuvring from 5 to 25% loads.

### (III) Wave-loading

Due to its fast response time, the eEVO technique can also be used during the sudden load changes that could be produced by sea waves, and could take place when the engine is operating in the low load regime (< 15% loads). Under such conditions (e.g. heavy sea / waves) where the propeller could come out (partly) of the water, the resistance on the propeller, and therefore the requested engine torque is reduced significantly. This causes the speed controller to reduce the injected amount of fuel in order to maintain the engine revolutions. By applying eEVO at the same time, the engine efficiency is artificially penalized and makes the required reduction of the injected amount of fuel (requested from the speed controller) less. This helps to reduce the subsequent required change (reduction) in boost pressure while at the same time provides sufficient air-fuel ratios, thus preventing misfiring cycles from taking place due to the formation of lean mixtures. Due to the general slow response of a T/C to sudden load changes this relatively higher T/C speed is beneficial for the improved response of the engine as soon as the propeller submerges back into the water, few seconds later.

When the propeller goes back into the water and the resistance increases again, the eEVO setting is retarded towards the standard (normal) setting providing highest engine efficiency. In the case where the resistance and therefore the torque demand are increasing above the corresponding value on the propeller curve the eEVO setting cannot be delayed any further.

Overall, the application of the eEVO strategy during sudden reductions in load demand provides benefits in the response of the T/C to these load changes. By maintaining the Turbocharger speed relatively higher, in comparison to its speed in the absence of eEVO method, the engine's response to the load change is immediate. As a result this relatively increased Turbocharger speed helps in significantly improving the engine load response capability when an increased torque demand is occurring during wave loading operation.

When the internal combustion engine is designed as a dual fuel engine, for example as a uniflow-scavenged dual-fuel two-stroke large diesel engine, or as a gas engine, it is preferred that the engine is configured to operate in the gas mode with a low pressure gas system. Accordingly, the gas supply system is preferably configured as a low pressure gas system. This means that the injection pressure with which the combustion gas is injected into the combustion chamber of the cylinder amounts to at most 100 bar (10 MPa). Preferably the injection pressure is at most 50 bar (5 MPa) and particularly preferably at most 20 bar (2 MPa). During the operation of the internal combustion engine the gas pressure, this means the pressure with which the combustion gas is injected into the cylinder generally is not constant, but rather can, for example, vary in dependence on the load or the speed of rotation of the combustion engine.

Having regard to the gas supply system, an as small as possible gas pressure is striven for in a preferred embodiment, for the injection of the combustion gas into the combustion chamber. Thus, the maximum injection pressure for the combustion gas can amount to, for example, only 15 bar or even less.

An injection pressure of the combustion gas that is as small as possible, naturally has large advantages with respect to safety aspects. Moreover, the overall gas supply system has to be designed not only for such comparatively small operating pressures, which in particular having regard to the sealing of the system, the emerging forces, for example at the valve seat, and also the design of the valve drive, as well as the pressure loading of the gas guiding lines and/or their connections is particularly advantageous. It also does not require any particular high pressure compressors by means of which the combustion gas, as is the case in high pressure systems, has to be compressed to an operating pressure of, for example, 350 bar or even higher which also is advantageous having regard to economic and cost aspects.

Precisely with regard to an as low as possible injection pressure of the combustion gas it is particularly preferable when a gas inlet valve and/or a gas inlet nozzle for introducing the gas into the cylinder is/are arranged in the cylinder wall and/or in the cylinder liner and have an as large as possible spacing from the upper dead center position of the piston movement. Hereby it can namely be achieved that the compression pressure in the cylinder, against which the combustion gas has to be injected, is still comparatively small. When the piston releases the scavenging air slits on the downward movement the scavenging air begins to flow into the cylinder having regard to a longitudinally (uniflow) scavenged two-stroke large diesel engine. This takes place for so long until the piston again completely closes the scavenging air slits on its subsequent upward movement. Only then - generally after the closure of the scavenging air slits - is the exhaust valve closed and when it is completely closed, the compression pressure in the cylinder starts to increase due to the upward movement of the piston until it achieves its maximum value for example then when the piston is in its upper dead center position.

For this reason the combustion gas injection preferably takes place then when no particularly large compression pressure is present in the cylinder and particularly preferably the injection of the combustion gas starts before the outlet valve is closed.

For this reason it is preferred when the gas inlet nozzle provided in the cylinder wall or the cylinder liner has an as large as possible spacing from the upper dead center position with respect to the axial direction . On the other hand, also constructive limitations exist, with regard to where the gas inlet nozzle can be arranged. In practice it has been shown to be a very good compromise when the gas inlet nozzle of the gas supply system is arranged at such a height (having regard to the axial direction of the cylinder) that its spacing from the upper dead center position amounts to particularly preferably 50% to 60% of the spacing between the upper and the lower dead center position.

Having regard to the position of the scavenging air slits it has been found to be particularly advantageous when the gas inlet nozzle is arranged at such a height (having regard to the axial direction of the cylinder), that its spacing from the upper surface of the scavenging air slits ("upper surface" having respect to the common operational position of the use of the combustion engine) is preferably less than 50% and particularly preferably amounts to 30% to 40% of the spacing of the upper edge of the scavenging air slits from the upper dead center position.

The preferred arrangement of the gas inlet nozzle also has the further advantage besides the enablement of a low injection pressure for the combustion gas that, having regard to the axial direction of the cylinder, a large spacing between the gas inlet nozzle and the exhaust valve exists. Hereby, on the one hand, it is avoided that an essential component of the injected combustion gas can escape through the exhaust valve in the non-combusted state and, on the other hand, has more time for the closure of the outlet valve.

Furthermore, the preferred arrangement of the gas inlet nozzle is advantageous also having regard to an as homogeneous as possible air to combustion gas mixture. Through the early injection of the combustion gas with respect to the compression stroke of the piston, the scavenging air and the combustion gas have sufficient time to intimately mix before the combustion of the mixture starts. This leads to an as ideal as possible combustion process in the combustion chamber and, in particular also to a contaminant low combustion process in the combustion chamber.

Naturally also two or more gas supply systems and/or two or more gas inlet nozzles or valves can be provided at a cylinder.

It is understood that the embodiments of the invention described in this application can also be combined in any suitable manner in dependence on the application and that in particular the special embodiments shown in the drawing are only to be understood by way of example.

## Claims

1. A low-load operation method for operating a reciprocating uniflow-scavenged dual-fuel two-stroke large diesel engine comprising a cylinder in which a piston is arranged movable to and fro between a top dead center corresponding to a crank angle of 0° or 360°, respectively, and a bottom dead center corresponding to a crank angle of 180° and having an outlet valve which is hydraulically actuable via a valve hydraulic system at a predefined opening pressure by means of a hydraulic medium, **characterized in that** in a low-load range between 0% and 25% of a maximum engine load the internal combustion engine is operated in a gas mode, wherein the crank angle for opening the exhaust valve of the internal combustion engine is reduced from a normal crank angle for opening the exhaust valve in a load range above 25% of the maximum engine load, to a value between 15° and 90°, and wherein in the low-load range the crank angle for opening the exhaust valve is reduced with decreasing load.

2. A low-load operation method according to claim 1, wherein the exhaust valve of the internal combustion engine is opened at a crank angle between 30° and 80°, preferably between 40° and 70°, most preferably at a crank angle of about 40°.

3. A low-load operation method according to anyone of the preceding claims, wherein the internal combustion engine is operated in the low-load range between 0.5% and 20%, preferably between 5% and 15%, in particular at about 10% of the maximum engine load.

4. A low-load operation method according to anyone of the preceding claims, wherein a predeterminable amount of fuel, in particular gas is supplied into a combustion chamber of the cylinder so that the break specific fuel consumption (BSFC) at 42.7 MJ/Kg is between 450 g/kWh at about 0.5% of the maximum engine load and 150 g/kWh at about 20% of the maximum engine load and.

5. A low-load operation method according to anyone of the preceding claims, wherein in the gas operation mode a nitrogen oxide emission (NOx wet) is between about 1 g/kWh and about 4 g/kWh in a load range between about 0.5% of the maximum engine load about 25% of the maximum engine load.

6. A low-load operation method according to anyone of the preceding claims, wherein in the gas operation mode a hydrocarbon emission (THC) is between about 20 g/kWh and about 3 g/kWh in a load range between about 0.5% of the maximum engine load about 25% of the maximum engine load.

7. A low-load operation method according to anyone of the preceding claims, wherein in the gas operation mode a carbon oxide emission (CO) is between about 350 vol ppm dry and about 150 vol ppm dry in a load range between about 0.5% of the maximum engine load about 25% of the maximum engine load.

8. A low-load operation method according to anyone of the preceding claims, wherein in the gas operation mode an average exhaust gas temperature (Exh temp. a. cycl avg, t4) in an exhaust port of the combustion engine is between about 280°C and about 220°C in a load range between about 0.5% of the maximum engine load about 25% of the maximum engine load.

9. A low-load operation method according to anyone of the preceding claims, wherein in the gas operation mode an average exhaust gas temperature before entering into a turbo charger turbine of the combustion engine (Exh temp. b. TC, t5) is between about 330°C and about 300°C in a load range between about 0.5% of the maximum engine load about 25% of the maximum engine load.

10. A low-load operation method according to anyone of the preceding claims, wherein a gas pressure (cylinder pressure) in the cylinder varies between about 6 bar and about 60 bar in crank angle range between about -30° and about 30° in respect of the top dead center corresponding to 0°.

11. A low-load operation method according to anyone of the preceding claims, wherein in the low operation mode below 25% of the maximum engine load a servo-oil pressure for actuating the exhaust valve is increased to a level similar to those required at about the maximum engine load equal to 100% engine load, wherein the servo oil-pressure is preferably at about 280 bar.

12. A low-load operation method according to anyone of the preceding claims, wherein the method is used in a steady low-load operation gas mode, preferably below about 10% of the maximum engine load, or in a maneuvering operation mode, preferably between about 5% and 25% of the maximum engine load.

13. A reciprocating piston uniflow-scavenged dual-fuel two-stroke large diesel engine, comprising a cylinder in which a piston is arranged movable to and fro between a top dead center corresponding to a crank angle of 0° or 360°, respectively, and a bottom dead center corresponding to a crank angle of 180° and having an outlet valve which is hydraulically actuable via a valve hydraulic system at a predefined opening pressure by means of a hydraulic medium, comprising an engine control system for operating the combustion engine in a low-load operation mode according to anyone of claims 1 to 12.

14. A computer program product comprising instructions to cause the reciprocating piston uniflow-scavenged dual-fuel two-stroke large diesel engine of claim 13 to operate in a low-load operation mode according to anyone of claims 1-12.

## Patentansprüche

1. Niedriglastbetriebsverfahren zum Betreiben eines Hubkolben-Zweitakt-Grossdieselmotors mit Einstromspülung und Zweistoffantrieb, umfassend einen Zylinder in welchem ein Kolben vor und zurück bewegbar zwischen einem oberen Totpunkt, entsprechend einem Kurbelwellenwinkel von jeweils 0° oder 360°, und einem unteren Totpunkt entsprechend einem Kurbelwellenwinkel von 180° angeordnet ist, und mit einem Auslassventil, das hydraulisch über ein Ventil-Hydrauliksystem bei einem vordefinierten Öffnungsdruck durch ein hydraulisches Medium betätigbar ist, **dadurch gekennzeichnet, dass** in einem Niedriglastbereich zwischen 0% und 25% einer maximalen Motorlast, der Verbrennungsmotor in einem Gasmodus betrieben wird, wobei der Kurbelwellenwinkel zum Öffnen des Abgasventils des Verbrennungsmotors von einem normalen Kurbelwellenwinkel zum Öffnen des Abgasventils in einem Lastbereich über 25% der maximalen Motorlast auf einen Wert zwischen 15° und 90° reduziert wird, und wobei der Kurbelwellenwinkel zum Öffnen des Abgasventils im Niedriglastbereich mit abnehmender Last reduziert wird.

2. Niedriglastbetriebsverfahren nach Anspruch 1, wobei das Abgasventil des Verbrennungsmotors bei einem Kurbelwellenwinkel zwischen 30° und 80°, vorzugsweise zwischen 40° und 70°, besonders bevorzugt bei einem Kurbelwellenwinkel von etwa 40° geöffnet wird.

3. Niedriglastbetriebsverfahren nach einem der vorangehenden Ansprüche, wobei der Verbrennungsmotor im Niedriglastbereich zwischen 0.5% und 20%, vorzugsweise zwischen 5% und 15%, besonders bevorzugt bei etwa 10% der maximalen Motorlast betrieben wird.

4. Niedriglastbetriebsverfahren nach einem der vorangehenden Ansprüche, wobei eine vorbestimmbare Menge an Treibstoff, insbesondere Gas einer Brennkammer des Zylinders zugeführt wird, so dass der spezifische Kraftstoffverbrauch (BSFC) bei 42.7 MJ/Kg zwischen 450 g/kWh bei etwa 0.5% der maximalen Motorlast und 150 g/kWh bei etwa 20% der maximalen Motorlast liegt.

5. Niedriglastbetriebsverfahren nach einem der vorangehenden Ansprüche, wobei im Gasbetriebsmodus eine Stickoxidemission (NOx wet) in einem Lastbereich zwischen etwa 0.5% der maximalen Motorlast und etwa 25% der maximalen Motorlast zwischen etwa 1 g/kWh und etwa 4g/kWh liegt.

6. Niedriglastbetriebsverfahren nach einem der vorangehenden Ansprüche, wobei im Gasbetriebsmodus eine Kohlenwasserstoffemission (THC) in einem Lastbereich zwischen etwa 0.5% der maximalen Motorlast und etwa 25% der maximalen Motorlast zwischen etwa 20g/kWh und etwa 3g/kWh liegt.

7. Niedriglastbetriebsverfahren nach einem der vorangehenden Ansprüche, wobei im Gasbetriebsmodus eine Kohlenstoffoxid-Emission (CO) in einem Lastbereich zwischen etwa 0.5% der maximalen Motorlast und etwa 25% der maximalen Motorlast zwischen etwa 350 vol ppm dry und etwa 150 vol ppm dry liegt.

8. Niedriglastbetriebsverfahren nach einem der vorangehenden Ansprüche, wobei im Gasbetriebsmodus eine durchschnittliche Abgastemperatur (Exh temp. a. cycl avg, t4) in einer Abgasöffnung des Verbrennungsmotors in einem Lastbereich zwischen etwa 0.5% der maximalen Motorlast und etwa 25% der maximalen Motorlast zwischen etwa 280°C und etwa 220°C liegt.

9. Niedriglastbetriebsverfahren nach einem der vorangehenden Ansprüche, wobei im Gasbetriebsmodus eine durchschnittliche Abgastemperatur vor dem Eintritt in eine Turbolader-Turbine des Verbrennungsmotors (Exh temp. b. TC, t5) in einem Lastbereich zwischen etwa 0.5% der maximalen Motorlast und etwa 25% der maximalen Motorlast zwischen etwa 330°C und etwa 300°C liegt.

10. Niedriglastbetriebsverfahren nach einem der vorangehenden Ansprüche, wobei ein Gasdruck (Zylinderdruck) in dem Zylinder zwischen etwa 6 bar und etwa 60 bar in einem Kurbelwellenwinkelbereich zwischen etwa -30° und etwa 30° in Bezug auf den oberen Totpunkt, der 0° entspricht, variiert.

11. Niedriglastbetriebsverfahren nach einem der vorangehenden Ansprüche, wobei im Niedrigbetriebsmodus unterhalb von 25% der maximalen Motorlast ein Servoöl-Druck zum Betätigen des Abgasventils auf ein Level erhöht wird, das demjenigen ähnelt, das bei etwa der maximalen Motorlast, die gleich 100% Motorlast ist, erforderlich ist, wobei der Servoöl-Druck vorzugsweise bei etwa 280 bar liegt.

12. Niedriglastbetriebsverfahren nach einem der vorangehenden Ansprüche, wobei das Verfahren in einem stabilen Gasmodus bei geringer Last, vorzugsweise unter etwa 10% der maximalen Motorlast, oder in einem Manöver-Betriebsmodus, vorzugsweise zwischen etwa 5% und 25% der maximalen Motorlast, verwendet wird.

13. Hubkolben-Zweitakt-Grossdieselmotor mit Einstromspülung und Zweistoffantrieb, umfassend einen Zylinder in welchem ein Kolben vor und zurück bewegbar zwischen einem oberen Totpunkt, entsprechend einem Kurbelwellenwinkel von jeweils 0° oder 360°, und einem unteren Totpunkt entsprechend einem Kurbelwellenwinkel von 180° angeordnet ist, und mit einem Auslassventil, das hydraulisch über ein Ventil-Hydrauliksystem bei einem vordefinierten Öffnungsdruck durch ein hydraulisches Medium betätigbar ist, umfassend ein Motorkontrollsystem zum Betreiben des Verbrennungsmotors in einem Niedriglastbetriebsmodus nach einem der Ansprüche 1 bis 12.

14. Computerprogrammprodukt, das Instruktionen umfasst, um zu bewirken, dass der Hubkolben-Zweitakt-Grossdieselmotor mit Einstromspülung und Zweistoffantrieb aus Anspruch 13 in einem Niedriglastbetriebsmodus nach einem der Ansprüche 1 bis 12 arbeitet.

## Revendications

1. Procédé de fonctionnement à faible charge pour faire fonctionner un grand moteur diesel à deux temps à deux carburants à balayage unidirectionnel à mouvement alternatif, comprenant un cylindre dans lequel un piston est disposé de manière à pouvoir effectuer un mouvement de va-et-vient entre un point mort haut correspondant à un angle de vilebrequin de 0° ou de 360°, et un point mort bas correspondant à un angle de vilebrequin de 180°, et comprenant une soupape de sortie qui peut être actionnée hydrauliquement par le biais d'un système hydraulique de soupape à une pression d'ouverture prédéfinie au moyen d'un fluide hydraulique, **caractérisé en ce que** dans une plage de faible charge comprise entre 0 % et 25 % d'une charge maximale du moteur, le moteur à combustion interne fonctionne en mode gaz, dans lequel l'angle de vilebrequin pour l'ouverture de la soupape d'échappement du moteur à combustion interne est réduit d'un angle de vilebrequin normal pour l'ouverture de la soupape d'échappement dans une plage de charge supérieure à 25 % de la charge maximale du moteur, à une valeur comprise entre 15° et 90°, et dans lequel dans la plage de faible charge, l'angle de vilebrequin pour l'ouverture de la soupape d'échappement est réduit lorsque la charge diminue.

2. Procédé de fonctionnement à faible charge selon la revendication 1, dans lequel la soupape d'échappement du moteur à combustion interne est ouverte à un angle de vilebrequin compris entre 30° et 80°, de préférence entre 40° et 70°, de manière préférée entre toutes à un angle de vilebrequin d'environ 40°.

3. Procédé de fonctionnement à faible charge selon l'une quelconque des revendications précédentes, dans lequel le moteur à combustion interne fonctionne dans la plage de faible charge comprise entre 0.5 % et 20 %, de préférence entre 5 % et 15 %, en particulier à environ 10 % de la charge maximale du moteur.

4. Procédé de fonctionnement à faible charge selon l'une quelconque des revendications précédentes, dans lequel une quantité prédéterminée de carburant, en particulier de gaz, est fournie dans une chambre de combustion du cylindre de sorte que la consommation de carburant spécifique à la rupture (BSFC) à 42.7 MJ/Kg soit comprise entre 450 g/kWh à environ 0.5 % de la charge maximale du moteur et 150 g/kWh à environ 20 % de la charge maximale du moteur.

5. Procédé de fonctionnement à faible charge selon l'une quelconque des revendications précédentes, dans lequel, dans le mode de fonctionnement au gaz, une émission d'oxyde d'azote (NOx wet) est comprise entre environ 1 g/kWh et environ 4 g/kWh dans une plage de charge comprise entre environ 0.5 % de la charge maximale du moteur et environ 25 % de la charge maximale du moteur.

6. Procédé de fonctionnement à faible charge selon l'une quelconque des revendications précédentes, dans lequel, dans le mode de fonctionnement au gaz, une émission d'hydrocarbures (THC) est comprise entre environ 20 g/kWh et environ 3 g/kWh dans une plage de charge comprise entre environ 0.5 % de la charge maximale du moteur et environ 25 % de la charge maximale du moteur.

7. Procédé de fonctionnement à faible charge selon l'une quelconque des revendications précédentes, dans lequel, dans le mode de fonctionnement au gaz, une émission d'oxyde de carbone (CO) est comprise entre environ 350 vol ppm dry et environ 150 vol ppm dry dans une plage de charge comprise entre environ 0.5 % de la charge maximale du moteur et environ 25 % de la charge maximale du moteur.

8. Procédé de fonctionnement à faible charge selon l'une quelconque des revendications précédentes, dans lequel, dans le mode de fonctionnement au gaz, une température moyenne des gaz d'échappement (Exh temp. a. cycl avg, t4) dans un orifice d'échappement du moteur à combustion est comprise entre environ 280 °C et environ 220 °C dans une plage de charge comprise entre environ 0.5 % de la charge maximale du moteur et environ 25 % de la charge maximale du moteur.

9. Procédé de fonctionnement à faible charge selon l'une quelconque des revendications précédentes, dans lequel, dans le mode de fonctionnement au gaz, une température moyenne des gaz d'échappement avant d'entrer dans une turbine de turbocompresseur du moteur à combustion (Exh temp. b. TC, t5) est comprise entre environ 330 °C et environ 300 °C dans une plage de charge comprise entre environ 0.5 % de la charge maximale du moteur et environ 25 % de la charge maximale du moteur.

10. Procédé de fonctionnement à faible charge selon l'une quelconque des revendications précédentes, dans lequel une pression de gaz (pression de cylindre) dans le cylindre varie entre environ 6 bar et environ 60 bar dans une plage d'angle de vilebrequin comprise entre environ -30° et environ 30° par rapport au point mort haut correspondant à 0°.

11. Procédé de fonctionnement à faible charge selon l'une quelconque des revendications précédentes, dans lequel, dans le mode de fonctionnement à faible charge inférieur à 25 % de la charge maximale du moteur, une pression d'huile asservie pour actionner la soupape d'échappement est augmentée à un niveau similaire à ceux requis à environ la charge maximale du moteur égale à 100 % de la charge du moteur, dans lequel la pression d'huile asservie est de préférence à environ 280 bar.

12. Procédé de fonctionnement à faible charge selon l'une quelconque des revendications précédentes, dans lequel le procédé est utilisé dans un mode de fonctionnement au gaz à faible charge stable, de préférence inférieur à environ 10 % de la charge maximale du moteur, ou dans un mode de fonctionnement de manoeuvre, de préférence entre environ 5 % et 25 % de la charge maximale du moteur.

13. Grand moteur diesel à deux temps à deux carburants à balayage unidirectionnel à mouvement alternatif, comprenant un cylindre dans lequel un piston est disposé de manière à pouvoir effectuer un mouvement de va-et-vient entre un point mort haut correspondant à un angle de vilebrequin de 0° ou de 360°, et un point mort bas correspondant à un angle de vilebrequin de 180°, et comprenant une soupape de sortie qui peut être actionnée hydrauliquement par le biais d'un système hydraulique de soupape à une pression d'ouverture prédéfinie au moyen d'un fluide hydraulique, comprenant un système de commande de moteur pour faire fonctionner le moteur à combustion dans un mode de fonctionnement à faible charge selon l'une quelconque des revendications 1 à 12.

14. Produit de programme informatique comprenant des instructions pour amener le grand moteur diesel à deux temps à deux carburants à balayage unidirectionnel à mouvement alternatif selon la revendication 13 à fonctionner dans un mode de fonctionnement à faible charge selon l'une quelconque des revendications 1 à 12.
